# EUROPÄISCHE PATENTSCHRIFT

(11) **EP 2 454 641 B1**
(45) Veröffentlichungstag und Bekanntmachung des Hinweises auf die Patenterteilung: **28.08.2013**
(21) Anmeldenummer: 10734896.3
(22) Anmeldetag: 14.07.2010
(51) Int. Cl.: G05D 7/01

(54) **DURCHFLUSSBEGRENZER**
FLOW LIMITER
LIMITEUR DE DÉBIT

(30) Priorität: 14.07.2009 CH 11002009
(43) Veröffentlichungstag der Anmeldung: 23.05.2012
(73) Patentinhaber: Belimo Holding AG, 8340 Hinwil (CH)
(72) Erfinder: KELLER, Urs, 8340 Hinwil (CH); KÜHNE, Jörg, 8645 Jona (CH)
(74) Vertreter: Rentsch Partner AG
(86) Internationale Anmeldenummer: PCT/CH2010/000180
(87) Internationale Veröffentlichungsnummer: WO 2011/006272

(56) Entgegenhaltungen:
- WO-A1-2009/062997
- GB-A- 2 231 940

## Beschreibung

### Technisches Gebiet

Die vorliegende Erfindung betrifft einen Durchflussbegrenzer zum Begrenzen eines Volumenstroms durch eine Flüssigkeitsleitung. Die vorliegende Erfindung betrifft insbesondere einen Durchflussbegrenzer, der einen Träger mit Durchlass und eine am Träger angebrachte Flachformfeder aufweist, wobei die Flachformfeder eingerichtet ist, sich mit steigendem Differenzdruck zunehmend an den Träger anzulegen und dabei die Öffnung zu verkleinern.

### Stand der Technik

Durchflussbegrenzer oder Durchflussmengenregler begrenzen den Volumenstrom durch eine Flüssigkeitsleitung, z.B. eine Rohrleitung, innerhalb eines definierten Arbeitsbereichs des Differenzdrucks und ermöglichen somit einen konstanten Volumenstrom durch die Leitung unabhängig von Druckänderungen in der Leitung.

In der Patentschrift GB 783,323 wird ein Durchflussbegrenzer beschrieben, der eine an einem rund ausgestalteten Träger zentriert befestigte runde Flachformfeder umfasst. Der Träger weist eine Vielzahl von kleinen runden Öffnungen auf, welche auf zwei konzentrischen Ringen symmetrisch um das Zentrum des Trägers angeordnet sind und den maximalen Durchlass bestimmen. Bei zunehmendem Flüssigkeitsdruck in der Rohrleitung wird die Flachformfeder abgeflacht, so dass der offene Bereich zwischen Rohrleitung und Flachformfeder verkleinert wird. Gemäss GB 783,323 ist die Abflachung der Feder nicht linear zum zunehmenden Druck, weil die Abflachung im Zentrum beginnt und nach aussen fortschreitet, und weil die runde Ausgestaltung der Feder bewirkt, dass der nicht abgeflachte Bereich mit zunehmender Abflachung gegen den Randbereich hin schnell abnimmt. Im Durchflussbegrenzer nach GB 783,323 ist die gesamte Durchlassöffnung durch die ringförmig angeordneten Durchbrechungen limitiert, welche überdies durch ihre geringe Grösse ein erhöhtes Verschmutzungs- und Verstopfungsrisiko aufweisen. Überdies besteht eine erhöhte Schwingungsneigung, wenn beim zunehmenden Abflachen der Flachformfeder die einzelnen Löcher individuell verschlossen werden und dadurch der Gesamtdurchlass stufenweise verkleinert wird.

Die US-A-4,884,750 offenbart einen Durchflussbegrenzer zum Begrenzen eines Volumenstroms durch eine Flüssigkeitsleitung, welche einen Träger mit Durchlass und eine am Träger angebrachte gebogene Feder aufweist, welche eingerichtet ist, sich mit steigendem Differenzdruck (Δp) zunehmend abzuflachen. Die verschiedenen Formen der Federn haben entweder den Nachteil des nicht ausreichenden Volumenstroms oder beginnen bei zunehmendem Verschluss des Durchlasses zu schwingen.

In WO 2009/062997 wird ein Durchflussbegrenzer zum Begrenzen eines Volumenstroms durch eine Flüssigkeitsleitung beschrieben, welcher einen Träger mit Durchlass und eine am Träger angebrachte Flachformfeder umfasst. Die Flachformfeder weist mindestens eine Federzunge und der Durchlass mindestens eine Öffnung auf. Die Federzunge ist so ausgestaltet und über der Öffnung angeordnet, dass die Federzunge sich mit steigendem Differenzdruck zunehmend an den Träger anlegt und dabei die Öffnung verkleinert und den Durchlass innerhalb eines definierten Druckbereichs reduziert.

In GB 2 231 940 wird ein Durchflussregler für Waschmaschinen beschrieben, der ein festes Trägerelement mit Öffnungen umfasst, die teilweise durch Plastikelemente abgedeckt werden können. Die Plastikelemente sind als runde Scheiben ausgeführt, die in ihrem Zentrum vom Trägerelement abgehoben angeordnet sind. Die Plastikelemente biegen sich bei zunehmendem Druck mit ihren vom Zentrum abgewandten äusseren Randbereichen in Richtung des Trägerelements ab, so dass sie über den Öffnungen einen gewölbten Schirm bilden. Gemäss GB 2 231 940 sind zwei derartige Plastikelemente konzentrisch und in einem definierten Abstand übereinander angeordnet, wobei das untere Plastikelemente einen grösseren Durchmesser als das obere Plastikelement aufweist. Das untere Plastikelement ist zudem mit Öffnungen versehen, die beim Abbiegen des oberen Plastikelements in Richtung des Trägerelements schirmartig überdeckt werden.

### Darstellung der Erfindung

Es ist eine Aufgabe der vorliegenden Erfindung einen Durchflussbegrenzer zum Begrenzen eines Volumenstroms durch eine Flüssigkeitsleitung vorzuschlagen, welcher mindestens gewisse Nachteile des Stands der Technik nicht aufweist. Es ist insbesondere eine Aufgabe der vorliegenden Erfindung einen Durchflussbegrenzer vorzuschlagen, welcher gegenüber dem Stand der Technik ein kleineres Verschmutzungsrisiko und eine geringere Schwingungsneigung aufweist. Es ist insbesondere eine weitere Aufgabe der vorliegenden Erfindung einen Durchflussbegrenzer vorzuschlagen, welcher innerhalb eines ausgedehnten Druckbereichs einen konstanten Volumenstrom erzeugt.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Der Durchflussbegrenzer zum Begrenzen eines Volumenstroms durch eine Flüssigkeitsleitung umfasst einen Träger mit Durchlass (Durchlassöffnung) und eine am Träger angebrachte Flachformfeder. Die Flachformfeder umfasst mindestens eine Federzunge und der Durchlass umfasst mindestens eine Öffnung. Dabei ist die Federzunge so ausgestaltet und über der Öffnung angeordnet, dass die Federzunge sich mit steigendem Differenzdruck zunehmend an den Träger anlegt und dabei die Öffnung verkleinert und den Durchlass innerhalb eines definierten Druckbereichs reduziert.

Die oben genannten Ziele werden durch die vorliegende Erfindung insbesondere dadurch erreicht, dass der Federzunge ein Körper so vorgelagert oder die Federzunge in Strömungsrichtung so ausgerichtet ist, dass die Federzunge einem um mindestens 25% reduzierten Strömungsquerschnitt direkte Angriffsfläche bietet. Mit anderen Worten, der Federzunge ist ein Körper so vorgelagert oder die Federzunge ist so in Strömungsrichtung ausgerichtet, dass die Federzunge einem reduzierten Querschnittsteil der Strömung direkt ausgesetzt ist, der weniger als 75% der Oberfläche der Federzunge beträgt. Der Strömungsquerschnitt dem die Federzunge direkte Angriffsfläche bietet vergrössert sich mit steigendem Differenzdruck beim zunehmenden Anlegen der Federzunge an den Träger. Dadurch, dass die Federzunge bei niedrigen Differenzdruckwerten, d.h. insbesondere in der im Wesentlichen auslenkungsfreien Ausgangslage, weniger stark der direkten Strömung ausgesetzt wird, ergibt sich der Vorteil, dass die Federzunge bei niedrigen Differenzdruckwerten weniger stark ausgelenkt respektive an den Träger angelegt werden, und damit der Durchlass bei niedrigen Differenzdruckwerten weniger (schnell) reduziert wird, so dass ein Nenndurchfluss, d.h. ein konstanter Volumenstromwert, schon bei kleinerem Differenzdruck erreicht und damit ein erweiterter Arbeitsbereich mit konstantem Volumenstromwert erzielt wird.

Vorzugsweise weisen die Federzunge und die entsprechende Öffnung jeweils entlang einer Längsrichtung eine im Wesentlichen gleiche Ausdehnung auf. Durch die der Grösse der Federzunge entsprechende Dimensionierung der Öffnung kann gegenüber dem Stand der Technik bei vergleichbarer Grösse des Durchflussbegrenzers ein insgesamt grösserer Durchlass und ein reduziertes Verschmutzungsrisiko erreicht werden. Mit anderen Worten, bei gleichem Gesamtdurchlass kann der Durchflussbegrenzer kompakter und weniger schmutzanfällig ausgeführt werden. Durch das mit steigendem Differenzdruck zunehmende Anlegen der Federzunge am Träger wird überdies eine nichtlineare Zunahme des Federwiderstands bei steigendem Druck erzielt, wobei jedoch durch die damit verbundene kontinuierliche Durchlassverkleinerung eine gegenüber dem Stand der Technik reduzierte Schwingungsneigung erreicht wird.

In einer Ausführungsvariante ist die Federzunge bei einem niederen Differenzdruck des definierten Druckbereichs so in Strömungsrichtung ausgerichtet, dass die Federzunge mehrheitlich in Strömungsrichtung verläuft und einem reduzierten Strömungsquerschnittsteil direkte Angriffsfläche bietet, der weniger als 75% der Oberfläche der Federzunge beträgt, vorzugsweise ein Strömungsquerschnittsteil zwischen 8% und 25% der Federzungenoberfläche. Bei gerader Ausbildung der Federzunge in der strömungsfreien Ausgangslage weist die Federzunge gegenüber der Längsachse der Flüssigkeitsleitung entsprechend einen Winkel von weniger als 45° auf, vorzugsweise einen Winkel im Bereich von ca. 5° bis ca. 15°.

In einer Ausführungsvariante, weist der Träger eine sich in Gegenstromrichtung erhebende Rampe auf, und die Federzunge ist so ausgestaltet, dass sie sich mit steigendem Differenzdruck zunehmend verbiegt und an die Rampe anlegt und dabei die Öffnung kontinuierlich verkleinert und den Durchlass innerhalb des definierten Druckbereichs kontinuierlich reduziert.

In einer Ausführungsvariante ist der der Federzunge vorgelagerte Körper so eingerichtet und angeordnet, dass er bei einem niederen Differenzdruck des definierten Druckbereichs für mindestens einen Oberflächenteil von 25% der Federzunge, vorzugsweise für einen Oberflächenteil im Bereich von 90% bis 100% der Federzunge, einen Strömungsschatten (Projektionsschatten) erzeugt. Dabei ist der Träger im Wesentlichen eben ausgestaltet und die Federzunge ist so ausgestaltet, dass sie sich mit steigendem Differenzdruck zunehmend abflacht und an den Träger anlegt und dabei die Öffnung kontinuierlich verkleinert und den Durchlass innerhalb des definierten Druckbereichs kontinuierlich reduziert.

In einer Ausführungsvariante umfasst der Durchlass mindestens zwei nebeneinander liegende Öffnungen und der Träger umfasst einen Steg, welcher die nebeneinander liegenden Öffnungen voneinander trennt. Dabei ist die Federzunge so angeordnet, dass sie beim steigenden Differenzdruck zunehmend auf dem Steg aufliegt und die Öffnungen kontinuierlich reduziert, wobei die Öffnungen in definierten Restbereichen offen bleiben.

In einer weiteren Ausführungsvariante umfasst der Durchlass mehrere rotationssymmetrisch angeordnete Öffnungen, und die Flachformfeder umfasst mehrere rotationssymmetrisch angeordnete Federzungen, welche jeweils so angeordnet sind, dass sie beim steigenden Differenzdruck zunehmend auf dem Träger aufliegen und die Öffnungen kontinuierlich reduzieren, d.h. zunehmend zudecken.

In einer bevorzugten Ausführungsvariante weist die Flachformfeder mindestens zwei entlang einer gemeinsamen Längsachse in voneinander entgegengesetzten Richtungen ausgerichtete Federzungen auf.

In verschiedenen Ausführungsvarianten sind die Federzungen an einem äusseren Randbereich des Trägers, im Zentrum des Trägers oder an einem durchs Zentrum verlaufenden Befestigungssteg befestigt.

In einer Ausführungsvariante ist der Träger als runde Scheibe ausgestaltet, welche am äusseren Randbereich einen aufgestellten Kragen zum Einsetzen in eine Rohrleitung umfasst, z.B. in ein Verbindungsstück zwischen zwei Rohrleitungen oder in ein Ventil, z.B. einen Kugelhahn oder ein Hubventil.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

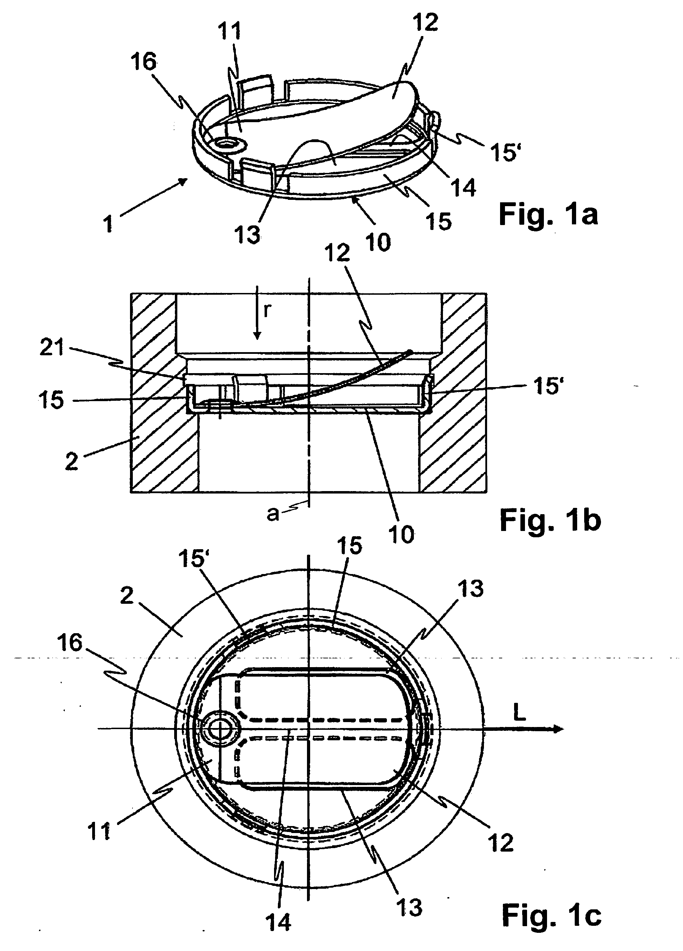

- Figur 1 a: zeigt eine Ansicht eines Durchflussbegrenzers mit einer als Federzunge ausgestalteten Flachformfeder, die über zwei durch einen Steg voneinander getrennte Öffnungen angebracht ist.
- Figur 1 b: zeigt einen Querschnitt des Durchflussbegrenzers der Figur 1 a eingebaut in eine Flüssigkeitsleitung.
- Figur 1 c: zeigt eine Aufsicht des Durchflussbegrenzers der Figur 1 a eingebaut in eine Flüssigkeitsleitung.
- Figur 2a: zeigt eine Ansicht eines Durchflussbegrenzers mit einer Flachformfeder, welche mehrere rotationssymmetrisch angeordnete, zentriert befestigte Federzungen aufweist, die über mehreren jeweils durch einen Steg voneinander getrennten Öffnungen angebracht sind.
- Figur 2b: zeigt einen Querschnitt des Durchflussbegrenzers der Figur 2a eingebaut in eine Flüssigkeitsleitung.
- Figur 2c: zeigt ein Aufsicht des Durchflussbegrenzers der Figur 2a eingebaut in eine Flüssigkeitsleitung.
- Figur 3a: zeigt eine Ansicht eines Durchflussbegrenzers mit einer Flachformfeder, welche mehrere rotationssymmetrisch angeordnete, am äusseren Randbereich des Durchflussbegrenzers befestigte Federzungen aufweist, die über mehreren jeweils durch einen Steg voneinander getrennten Öffnungen angebracht sind.
- Figur 3b: zeigt einen Querschnitt des Durchflussbegrenzers der Figur 3a eingebaut in eine Flüssigkeitsleitung.
- Figur 3c: zeigt ein Aufsicht des Durchflussbegrenzers der Figur 3a eingebaut in eine Flüssigkeitsleitung.
- Figur 4: zeigt einen Querschnitt des Durchflussbegrenzers bei kleinem Differenzdruck und entsprechend gering ausgelenkter Federzunge, sowie eine Kurve, die die nichtlineare Abhängigkeit von Auslenkung und Federkraft illustriert.
- Figur 5: zeigt einen Querschnitt des Durchflussbegrenzers bei grossem Differenzdruck und entsprechend stark ausgelenkter Federzunge, sowie eine Kurve, die die nichtlineare Abhängigkeit von Auslenkung und Federkraft illustriert.
- Figur 6: illustriert schematisch den Mengenverlauf des Volumenstroms durch den Durchflussbegrenzer.
- Figur 7: zeigt einen Querschnitt durch ein Hubventil mit eingebautem Durchflussbegrenzer in der Flüssigkeitszuführleitung.
- Figur 8: zeigt einen Querschnitt durch einen Kugelhahn mit eingebautem Durchflussbegrenzer in der Flüssigkeitszuführleitung.
- Figur 9a: zeigt eine Ansicht eines Durchflussbegrenzers mit einer Flachformfeder, welche zwei an einem quer über den Durchflussbegrenzer zwischen den äusseren Randbereichen laufenden Befestigungssteg befestigte Federzungen aufweist, die über jeweils zwei durch einen Steg voneinander getrennten Öffnungen angebracht sind.
- Figur 9b: zeigt eine andere Ansicht des Durchflussbegrenzers der Figur 9a.
- Figur 9c: zeigt einen Querschnitt des Durchflussbegrenzers der Figur 9a eingebaut in eine Flüssigkeitsleitung.
- Figur 9d: zeigt eine Aufsicht des Durchflussbegrenzers der Figur 9a eingebaut in eine Flüssigkeitsleitung.
- Figur 10: zeigt eine Aufsicht eines Durchflussbegrenzers mit einer Flachformfeder, welche vier rotationssymmetrisch angeordnete, am Zentrum des Durchflussbegrenzers befestigte Federzungen aufweist, die jeweils über einen zugeordneten Steg angebracht sind, der zwei jeweils einer Federzunge zugeordnete Öffnungen voneinander trennt.
- Figur 11: zeigt eine Aufsicht eines weiteren Durchflussbegrenzers mit einer Flachformfeder nach Fig. 9, deren zwei Federzungen jeweils über zwei zugeordnete Stege angebracht sind, der den Durchlass in drei jeweils einer Federzunge zugeordnete Öffnungen trennt.
- Figur 12a: zeigt einen Querschnitt eines Durchflussbegrenzers mit einem der Flachformfeder vorgelagerten Körper, welcher die Flachformfeder bei kleinem Differenzdruck vom direkten Auftreffen der Strömung abschirmt.
- Figur 12b: zeigt eine Aufsicht des Durchflussbegrenzers der Figur 12a.
- Figur 12c: zeigt eine 3D Ansicht des Durchflussbegrenzers der Figur 12a.
- Figur 13a: zeigt einen Querschnitt eines Durchflussbegrenzers mit einer Flachformfeder deren Federzungen in Strömungsrichtung ausgerichtet sind, um bei kleinem Differenzdruck der Strömung eine reduzierte Angriffsfläche zu bieten.
- Figur 13b: zeigt eine Aufsicht des Durchflussbegrenzers der Figur 13a.
- Figur 13c: zeigt eine 3D Ansicht des Durchflussbegrenzers der Figur 13a.

### Wege zur Ausführung der Erfindung

In den Figuren 1a, 2a, 3a, 4, 5, 7, 8, 9a, 9b, 10, 11, 12a, 12b, 12c, 13a, 13b und 13c bezeichnet das Bezugszeichen 1 einen Durchflussbegrenzer, der auch als Durchflussmengenregler bezeichnet wird und den Volumenstrom durch eine Flüssigkeitsleitung 2 innerhalb eines definierten Arbeitsbereichs (Δpₘᵢₙ, Δpₘₐₓ) des Differenzdrucks Δp begrenzt. Ein druckunabhängiger Volumenstrom *V̇* wird erreicht indem der Durchlass des Durchflussbegrenzers 1, d.h. der Durchflussquerschnitt oder die Durchflussfläche, abhängig von der aus dem Differenzdruck Δp erzeugten Kraft verringert wird. Für diesen Zweck umfasst der Durchflussbegrenzer 1 eine mit einem definierten Radius (in der Grössenordnung der Flüssigkeitsleitung 2, z.B. in der Grössenordnung des Rohrdurchmessers) Flachformfeder 11, welche an einem Träger 10 des Durchflussbegrenzers 1 befestigt ist und so über den Durchlassöffnungen 13, 18, 23, 23' des Durchflussbegrenzers 1 angeordnet ist, dass sie die variable Öff-nungsfläche, also den Durchlass des Durchflussbegrenzers 1 , mit zunehmendem Druck Δp zunehmend zudeckt und verschliesst. Dabei legt sich die Flachformfeder 11 zunehmend an den Träger 10 an, beispielsweise auf einem Steg 14, 24 und/oder auf Seitenrändern 29 der Öffnungen 18, wodurch die Flachformfeder 11 zunehmend härter wird. Die Flachformfeder 11 wird härter, weil ihre wirksame Länge durch das zunehmende Aufliegen am Träger 10 reduziert wird. So wird der Durchlass und damit der Durchfluss auch bei höherem Differenzdruck Δp gezielt geregelt und in einem bestimmten Arbeitsbereich [Δpₘᵢₙ, Δp_{max]} im Wesent-lichen konstant gehalten. Die Durchlassöffnungen sind jeweils als Durchbrechungen im Träger 10 ausgeführt.

Wie in den Figuren 1a, 1 b, 1c, 2a, 2b, 2c, 3a, 3b, 3c, 9a, 9b, 9d, 10, 11, 12b und 12c ersichtlich ist, ist der Träger 10 passend zum Querschnitt der Flüssigkeitsleitung 2 vorzugsweise rund ausgestaltet und weist einen abstehenden Kragen 15 auf. Der Kragen 15 ist am äusseren Randbereich des scheibenförmigen Trägers 10 angebracht und wird beispielsweise durch Druckverformung einstückig mit dem Träger 10 hergestellt. In einer Variante weist der Kragen 15 mehrere Abschnitte 15' auf, die leicht abgespreizt sind und in entsprechende Aufnahmen 21, z.B. eine Nut, in der Wandung der Flüssigkeitsleitung 2 eingreifen und den Durchflussbegrenzer 1 in der Flüssigkeitsleitung 2 axial fixieren.

In einer Ausführungsvariante (nicht dargestellt) ist ein Teil des Kragens 15 auf den Träger 10 zurückgebogen und klemmt die Flachformfeder 11 am Träger 10 fest. Die Flachformfeder 11 kann jedoch auch mittels einer Niete 16 oder durch Verkleben am Träger 10 befestigt sein.

In der Ausführungsvariante gemäss den Figuren 1 a, 1 b und 1c umfasst die Flachformfeder 11 eine Federzunge 12 und der Träger 10 weist einen Durchlass mit zwei nebeneinander liegenden Öffnungen 13 auf. Wie aus der Figur 1c ersichtlich ist, weisen die beiden Öffnungen 13 und die Federzunge 12 in der Längsrichtung L eine im Wesentlichen gleiche Ausdehnung (Länge) auf. Der Träger 10 weist einen Steg 14 auf, welcher die beiden Öffnungen 13 voneinander trennt. Die Flachformfeder 11 ist am äusseren Randbereich des runden Trägers 10 angebracht. Die beiden Öffnungen 13 sind rechteck- oder trapezförmig und erstrecken sich vom äusseren Randbereich, wo die Flachformfeder 11 befestigt ist, bis zum gegenüberliegenden äusseren Randbereich des Trägers 10. Die Flachformfeder 11 respektive die Federzunge 12 ist entlang der Längsachse des Stegs 14, entlang (parallel zu) den Öffnungen 13 ausgerichtet und so über den Öffnungen 13 angeordnet, dass sie beim mit steigendem Differenzdruck Δp zunehmenden Anliegen auf dem Steg 14 des Trägers 10 die Öffnungen 13 innerhalb des definierten Arbeitsbereichs [Δpₘᵢₙ, Δp_{max]} kontinuierlich zunehmend zugedeckt und verschliesst, bis beim maximalen Anliegen der Federzunge 12 ein minimaler Durchlass verbleibt. Der minimale Durchlass wird durch offen bleibende Restbereiche in vom Steg 14 abgewandten Randbereichen der Öffnungen 13 gebildet, welche durch die Federzunge 12 nicht zugedeckt werden.

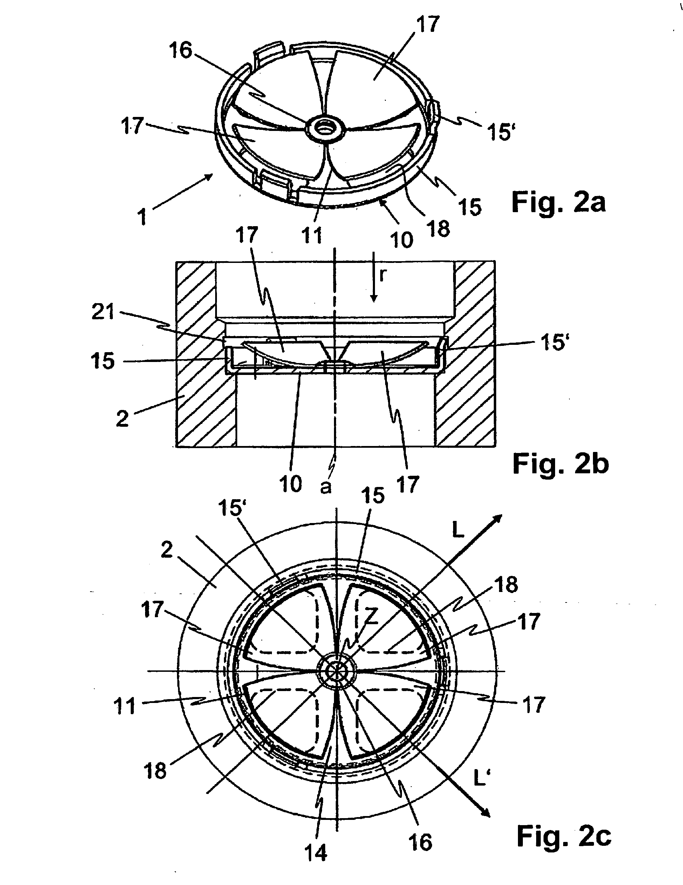

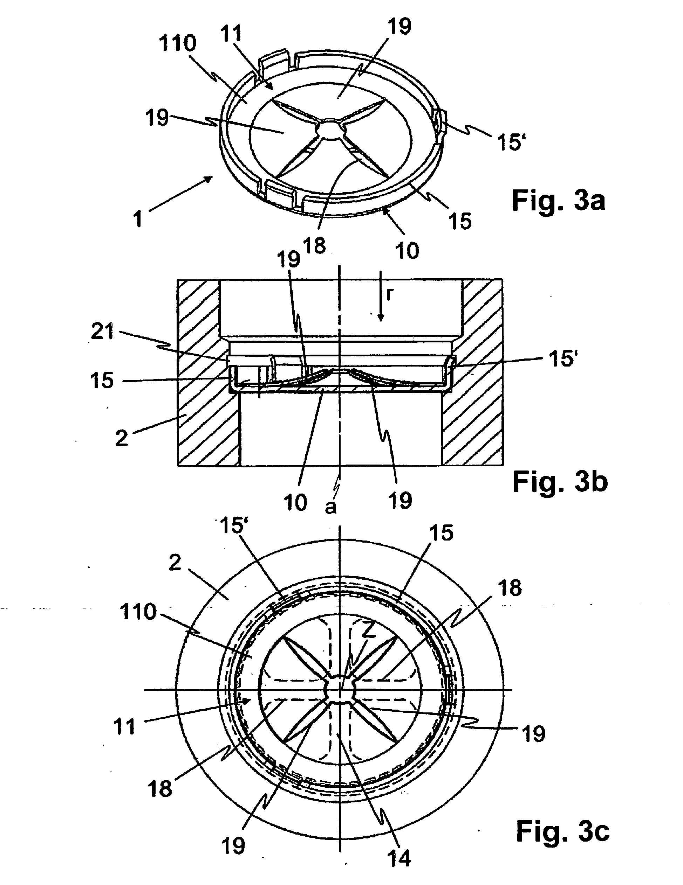

In der Ausführungsvariante gemäss den Figuren 2a, 2b, 2c, 3a, 3b und 3c weist der Träger 10 einen Durchlass mit vier rotationssymmetrisch angeordneten Öffnungen 18 auf, welche jeweils durch einen Steg 14 voneinander getrennt sind. Wie in den Figuren 2c und 3c ersichtlich ist, können die Stege 14 als Speichen eines Rads betrachtet werden, das aus dem runden Träger 10 durch die Öffnungen 18 gebildet wird. Die Öffnungen 18 sind jeweils als ungefähr dreieckförmige Kreissektoren des runden Trägers 10 ausgebildet, welche sich nicht vollständig bis zum Zentrum des Trägers 10 erstrecken. Die Flachformfeder 11 umfasst mehrere rotationssymmetrisch angeordnete Federzungen 17, 19, welche jeweils so angeordnet sind, dass sie beim steigenden Differenzdruck zunehmend auf dem Träger 10 aufliegen und die Öffnungen 18 kontinuierlich reduzieren.

In der Ausführungsvariante gemäss den Figuren 2a, 2b, 2c ist die Flachformfeder 11 im Zentrum Z des Trägers 10 angebracht und die Federzungen 17 sind jeweils einer Öffnung 18 zugeordnet. Wie aus der Figur 2c ersichtlich ist, weisen die Öffnungen 18 und die Federzungen 17 entlang der Längsrichtung L, L' eine im Wesentlichen gleiche Ausdehnung (Länge) auf. Die Federzungen 17 sind jeweils über einer zugeordneten Öffnung 18 so angeordnet, dass sie mit steigendem Differenzdruck Δp jeweils zunehmend auf beiden Stegen 14 aufliegen, die die betreffende Öffnung 18 begrenzen. Somit werden die Öffnungen 18 innerhalb des definierten Arbeitsbereichs [Δpₘᵢₙ, Δpₘₐₓ] kontinuierlich zunehmend zugedeckt und verschlossen, bis beim maximalen Anliegen der Federzunge 17 ein minimaler Durchlass verbleibt. Der minimale Durchlass wird bei den Öffnungen 18 jeweils durch einen offen bleibenden Restbereich in vom Zentrum Z abgewandten Randbereichen der Öffnungen 18 gebildet, welche durch die Federzungen 17 nicht zugedeckt werden

In der Ausführungsvariante gemäss den Figuren 3a, 3b, 3c weist die Flachformfeder 11 einen äusseren Reifenbereich 110 auf, welcher am Träger 10 angebracht ist. Im Unterschied zu der Ausführungsvariante gemäss den Figuren 2a, 2b, 2c sind die Federzungen 19 somit am äusseren Randbereich des Trägers 10 befestigt.

Wie aus der Figur 3c ersichtlich ist, weisen die Öffnungen 18 und die Federzungen 19 entlang ihrer Längsrichtung, d.h. entlang ihrer jeweiligen Symmetrieachse vom Reifenbereich 110 zum Zentrum Z hin, eine im Wesentlichen gleiche Ausdehnung (Länge) auf. Die Federzungen 19 sind jeweils über einem zugeordneten Steg 14 so angeordnet, dass sie mit steigendem Differenzdruck Δp jeweils zunehmend auf dem betreffenden Steg 14 aufliegen, und die beiden an den Steg 14 angrenzenden Öffnungen 18 zunehmend zudecken. Somit werden die Öffnungen 18 innerhalb des definierten Arbeitsbereichs [Δpₘᵢₙ, Δpₘₐₓ] kontinuierlich zunehmend zugedeckt und verschlossen, bis beim maximalen Anliegen der Federzunge 19 ein minimaler Durchlass verbleibt. Der minimale Durchlass wird bei den Öffnungen 18 jeweils durch einen offen bleibenden Bereich zwischen zwei benachbarten Federzungen 19 entlang der Symmetrieachse der betreffenden Öffnung gebildet, welcher durch die Federzungen 19 nicht zugedeckt wird.

Der Fachmann wird verstehen, dass auch drei oder mehr als vier Öffnungen 18 und entsprechende Federzungen 17, 19 vorgesehen werden können.

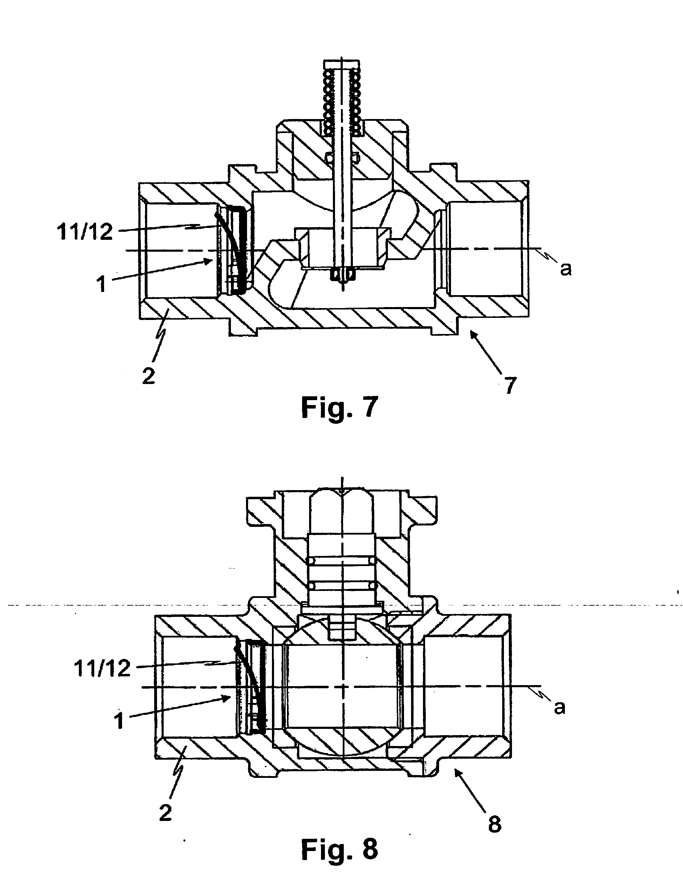

Figur 7 zeigt einen Querschnitt durch ein Hubventil 7 mit entfernbar oder fest eingebautem Durchflussbegrenzer 1 (gemäss einer der beschriebenen Ausführungsvarianten) in der Flüssigkeitszuführleitung 2.

Figur 8 zeigt einen Querschnitt durch einen Kugelhahn 8 mit entfernbar oder fest eingebautem Durchflussbegrenzer 1 (gemäss einer der beschriebenen Ausführungsvarianten) in der Flüssigkeitszuführleitung 2.

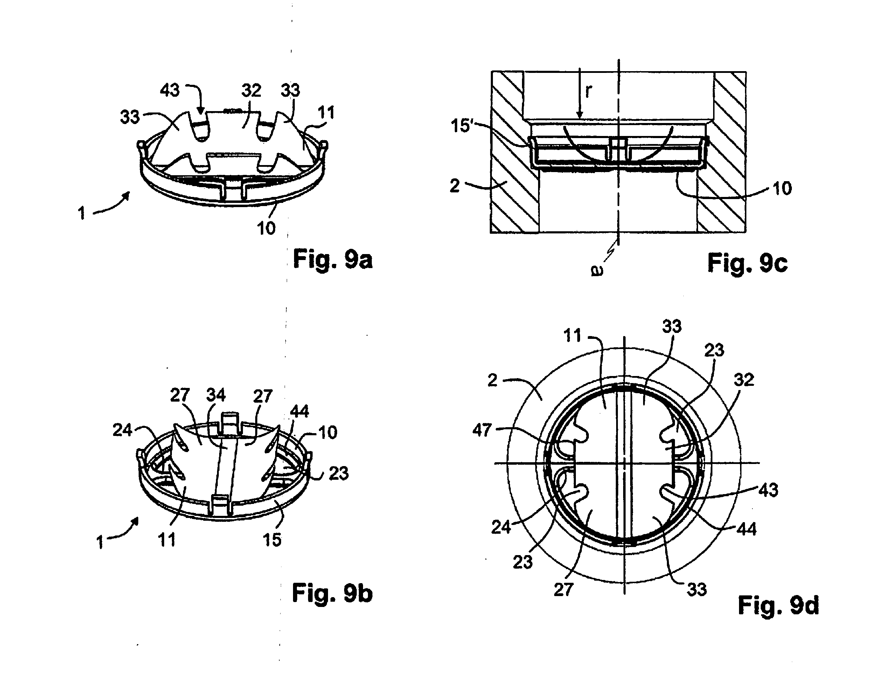

Die Figuren 9a, 9b, 9c und 9d zeigen Ansichten, einen Querschnitt und Aufsichten eines Durchflussbegrenzers 1 mit einer Flachformfeder 11, welche zwei an einem quer über den Durchflussbegrenzer 1 zwischen den äusseren Randbereichen laufenden Befestigungssteg 34 befestigte Federzungen 27 aufweist. Dabei kann die Befestigung der Feder 11 auf dem Steg 34 geklebt, genietet oder entsprechend den oben genannten anderen Befestigungsverfahren ausgestaltet sein. Jeder Teilbereich der Feder 11, also jede Federzunge 27, ist jeweils über zwei durch einen Steg 24 voneinander getrennten Öffnungen 23 angebracht. Die Öffnungen nehmen also ungefähr, abzüglich der Stege 24 und 34 jeweils einen Quadranten des kreisförmigen Durchlasses für den Durchflussbegrenzer 1 ein.

Im Querschnitt der Figur 9c ist ersichtlich, dass die Federzungen 27 in der Ausgangslage, das heisst ohne einen Fluidfluss, einen Tangentenwinkel zwischen 10 und 30 Grad gegenüber der Längsachse a der Flüssigkeitsleitung 2 aufweisen. Bei steigendem Fluidfluss vermindert sich diese Krümmung und insbesondere der mittlere Teil 32 der Federzunge 27 legt sich auf den Steg 24 ab, während die seitlichen Teile 33 der Federzungen 27 sich auf den Randbereichen 44 des Trägers ablegen.

Zwischen dem mittleren Teil 32 und den seitlichen Teilen 33 der Federzungen 27 bestehen Ausnehmungen 43, die insbesondere als Ausstanzungen ausgeführt sein können. Diese entsprechen in der Draufsicht eine halben Ellipse oder einem oval gerundeten Schlitz. Die Ausnehmungen 43 sind jedoch vorzugsweise mit sanfteren Übergängen als dargestellt in den Randbereich der Federzungen 27 eingelassen. Wird der Mittelachse einer Federzunge 27, die über dem Steg 24 angeordnet ist, in radialer Richtung der Winkel 0 Grad zugeordnet, so sind diese beiden Ausnehmungen 43 einer Federzunge 27 in einem Winkel zwischen 20 und 45 Grad, insbesondere bei ca. 30 Grad angeordnet.

Die Flachformfeder 11 ist, wenn sie abgeplattet wird und nicht die in der Figur 9c dargestellte vorgebogene Form hat, keine vollkommene Kreisscheibe, sondern sie ist insbesondere im Bereich des mittleren Teils 32 abgeschnitten. Die Abschnittskante entspricht einer Sehne 47 des Kreises. Diese Sehne 47 kann in den seitlichen Teilen 33 abgerundet in den Kreisrand der Feder 11 übergeben. Somit ergibt sich bei vollkommen auf den Stegen 24 und 34 aufliegender Feder 11 ein zweifacher verbleibender Durchlass. Zum einen ist dies der Bereich der Ausnehmungen 43 und andererseits der durch den jenseits der Sehne 47 verbleibenden Raum der beiden Öffnungen 23. Es ist klar, dass in einem in den Zeichnungen nicht dargestellten Ausführungsbeispiel einmal nur die Ausnehmungen 43 bestehen können und ein andermal nur der durch die Sehnen vorgegebene verbleibende Raum der beiden Öffnungen 23.

Der Kragen 15 weist auch hier mehrere Abschnitte 15' auf, die leicht abgespreizt sind, und den Durchflussbegrenzer 1 in der Flüssigkeitsleitung 2 axial fixieren können.

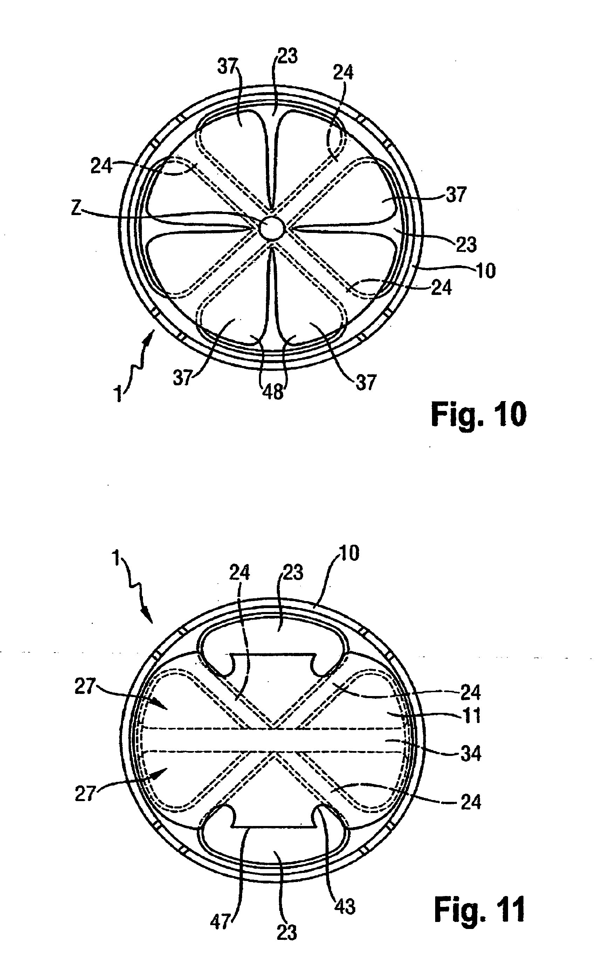

Die Figur 10 zeigt eine Aufsicht eines Durchflussbegrenzers 1 mit einer Flachformfeder 11, welche vier rotationssymmetrisch angeordnete, am Zentrum Z des Durchflussbegrenzers 1 befestigte Federzungen 37 aufweist. Diese Federzungen 37 sind gegenüber dem Ausführungsbeispiel der Figur 2 um 45 Grad rotiert, so dass sie jeweils über einem zugeordneten Steg 24 angebracht sind, der zwei jeweils einer Federzunge 37 zugeordnete Öffnungen 23 voneinander trennt. Andersherum sind jeder Öffnung 23 hier jeweils zwei Federzungen 37 zugeordnet. Die freibleibenden Durchlassbereiche ergeben sich hier aus den Kleeblattartigen Zwischenöffnungen zwischen den Federzungen 37. In einem anderen in den Zeichnungen nicht dargestellten Ausführungsbeispiel können die Ecken 48 der Federzungen abgeschnitten sein, um weitergehende Ausnehmungen zu gestalten, oder es können Ausnehmungen entsprechend den ovalen Ausstanzungen gemäss dem Ausführungsbeispiel der Fig. 9 bestehen.

Die Figur 11 zeigt eine Aufsicht eines weiteren Durchflussbegrenzers 1 mit einer Flachformfeder 11, abgewandelt gegenüber Fig. 9, deren zwei Federzungen 27 jeweils über zwei zugeordneten Stegen 24 angebracht sind. Die Stege 24 kreuzen sich im Zentrum in einem 90 Grad-Winkel zu einander und in einem 45 Grad Winkel zum Befestigungssteg 34. Der Durchlass ist hier also in drei jeweils einer Federzunge 27 zugeordnete Öffnungen 23 aufgetrennt. Ausnehmungen 43 und Sehnenabschnitt 47 entsprechen denen der Fig. 9, so dass insbesondere im mittleren Abschnitt 32 der verbleibende Durchlassbereich offen bleibt, während sich die seitlichen Federzungenbereiche auf dem Randbereich 44 des Trägers 10 ablegen. Es ist aber auch möglich, dass die Ausnehmungen 43 auch oder nur oder zusätzlich in den seitlichen Bereichen 33 vorgesehen sind.

Die Flachformfeder 11 ist vorzugsweise aus einem Federstahl, der je nach Variante gerade oder vorgebogen ausgestaltet ist, insbesondere im Bereich zwischen ungefähr 30 Grad, wie in den Ausführungsbeispielen der Figuren 1, 2 und 3, oder bis zu 80 Grad, wie in den Ausführungsbeispielen der Figuren 9 und 11. Die Breite der Stege 14 und 24 ist so ausgestaltet, dass sie eine sichere mechanische Auflagefläche bildet. Hierfür ist eine Breite von 5 bis 10 %, maximal 20 % des Durchmessers des Durchflussbegrenzers 1 oder der beidseitig überstehenden Breite der Flachformfeder 11 ausreichend.

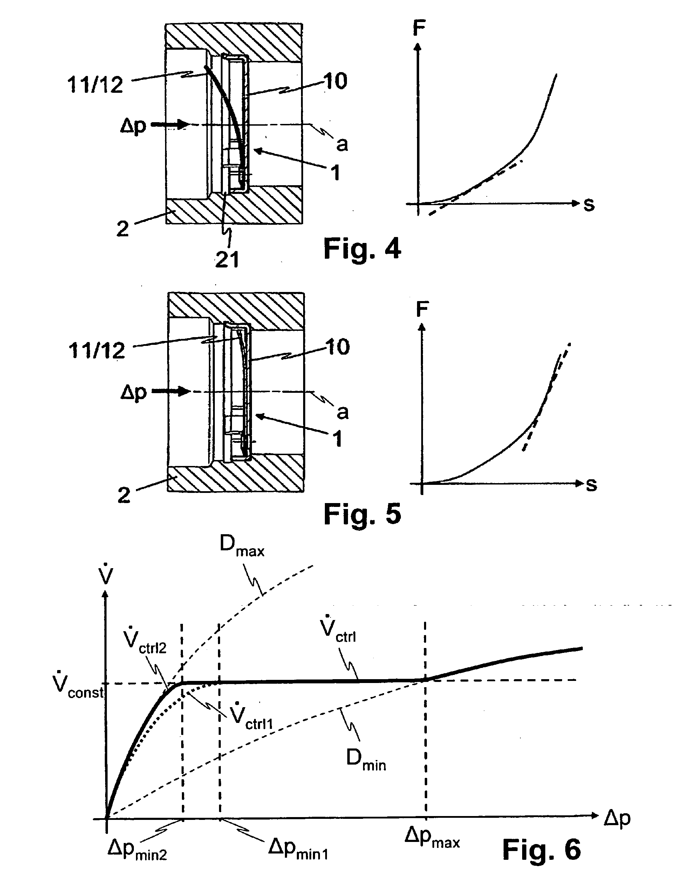

In den Figuren 4 und 5 wird der nichtlineare Zusammenhang zwischen Federkraft F und Auslenkung s dargestellt. Figur 4 zeigt die relativ geringe Auslenkung s der Flachformfeder 11 respektive einer Federzunge 12, 17, 19, 27 der Flachformfeder 11 in einem Bereich mit kleiner Druckdifferenz Δp und entsprechend kleiner Federkraft F. Figur 5 zeigt die vergleichsweise grosse Auslenkung s der Flachformfeder 11 respektive der Federzunge 12, 17, 19, 27 in einem Bereich mit relativ grosser Druckdifferenz Δp und entsprechend grosser und verstärkt zunehmender Federkraft F.

In der Figur 6 bezeichnet das Bezugszeichen Dₘₐₓ den (Mengen-) Verlauf des Volumenstroms *V̇* durch den Durchflussbegrenzer 1 abhängig vom Differenzdruck Δp bei maximalem, ungeregeltem Durchlass (vollständig geöffnete Durchlassöffnung). Das Bezugszeichen Dₘᵢₙ bezeichnet den (Mengen-) Verlauf des Volumenstroms *V̇* durch den Durchflussbegrenzer 1 abhängig vom Differenzdruck Δp bei minimalem Durchlass, welcher beim vollständigen Anliegen der Flachformfeder 11 respektive der Federzunge 12, 17, 19, 27 offen bleibt (offener Restbereich bei maximal geschlossener Durchlassöffnung). Wie aus der Figur 6 ersichtlich ist, folgt der geregelte (Mengen-) Verlauf des Volumenstroms *V̇_{ctrl}* der fett ausgezogenen Linie, welche im Arbeitsbereich, zwischen dem minimalen Differenzdruck Δpₘᵢₙ₂ und dem maximalen Differenzdruck Δpₘₐₓ, einen im Wesentlichen konstanten Volumenstromwert *V_{const}* annimmt, unterhalb des minimalen Differenzdrucks Δpₘᵢₙ₂ im Wesentlichen dem Verlauf Dₘₐₓ des Volumenstroms *V̇* bei ungeregeltem, maximalem Durchlass folgt, und oberhalb des maximalen Differenzdrucks Δpₘₐₓ dem Verlauf Dₘᵢₙ des Volumenstroms *V̇* bei minimalem (d.h. maximal zugedecktem) Durchlass folgt. Dabei stellt der mit *V̇_{ctrl2}* bezeichnete Teil des geregelten (Mengen-) Verlaufs des Volumenstroms *V̇_{ctrl}* bis zum Differenzdruck Δpₘᵢₙ₁ eine Verbesserung gegenüber dem mit *V̇*_{*ctrl*1} bezeichneten und gestrichelt gezeichneten (Mengen-) Verlauf des Volumenstroms *V̇_{ctrl}* dar. Gegenüber dem gestrichelt gezeichneten Verlauf *V̇*_{*ctrl*1} weist der verbesserte Verlauf *V̇*_{*ctrl*2} einen im unteren Druckbereich [Δpₘᵢₙ₂, Δpₘᵢₙ₁] erweiterten Arbeitsbereich [Δpₘᵢₙ₂, Δpₘₐₓ] mit konstantem Volumenstromwert *V_{const}* auf. Beim gestrichelt gezeichneten Verlauf liegt nur im kleineren Bereich [Δpₘᵢₙ₁, Δpₘₐₓ] ein konstanter Volumenstromwert *V_{const}* vor. Diese markante Verbesserung für kleine Werte des Differenzdrucks Δp unterhalb des Differenzdrucks Δpₘᵢₙ₁ wird dadurch erreicht, dass die Flachformfeder 11 respektive die Federzunge 12, 17, 19, 27, 27' bei niedrigen Differenzdruckwerten Δp (d.h. insbesondere in der im Wesentlichen auslenkungsfreien Ausgangslage) weniger stark der direkten Strömung ausgesetzt wird. Dadurch wird die Flachformfeder 11 respektive die Federzunge 12, 17, 19, 27, 27' bei niedrigen Differenzdruckwerten Δp weniger stark ausgelenkt respektive an den Träger 10, 10' angelegt, und damit der Durchlass bei niedrigen Differenzdruckwerten Δp weniger (schnell) reduziert, so dass der Nenndurchfluss, d.h. der konstante Volumenstromwert *V_{const}*, schon bei kleinerem Differenzdruck Δpₘᵢₙ₂ erreicht und damit ein erweiterter Arbeitsbereich [Δpₘᵢₙ₂, Δpₘₐₓ] mit konstantem Volumenstromwert *V_{const}* erzielt wird.

Je nach Ausführungsvariante wird die reduzierte Strömungsexponiertheit der Flachformfeder 11 respektive der Federzunge 12, 17, 19, 27, 27' dadurch erreicht, dass der Federzunge 12, 17, 19, 27 ein Körper vorgelagert wird, um die Federzunge 12, 17, 19, 27 vor direktem Auftreffen der Strömung abzuschirmen, oder dadurch, dass die Ausrichtung der Federzunge 12, 17, 19, 27' mehrheitlich in Strömungsrichtung r erfolgt, um der Strömung eine reduzierte Angriffsfläche zu bieten.

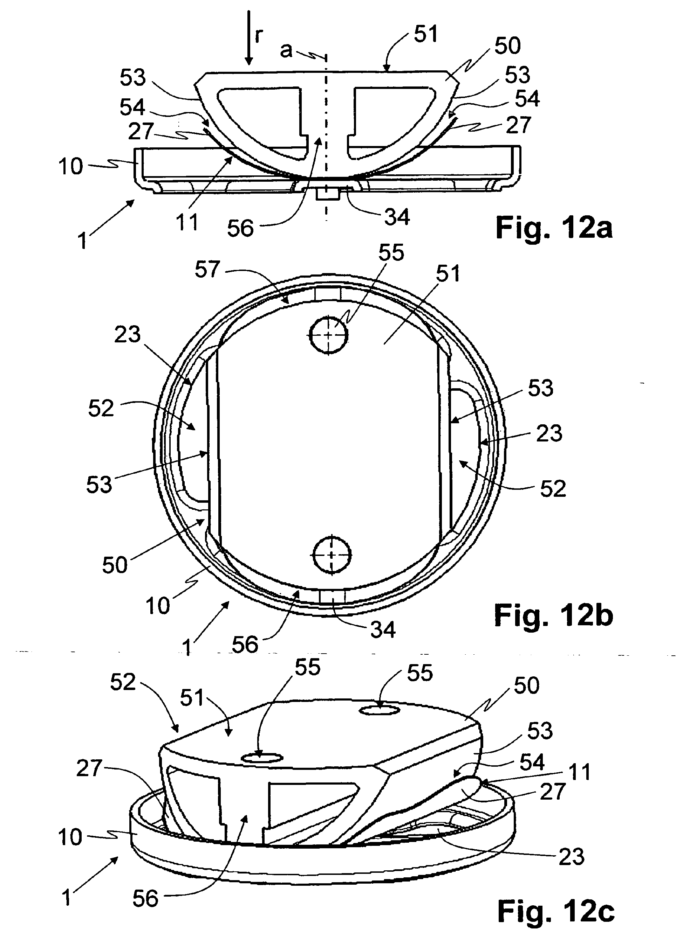

Die Figuren 12a, 12b, 12c illustrieren eine Ausführungsvariante des Durchflussbegrenzers 1 mit einer Flachformfeder 11 und einem in Strömungsrichtung r vorgelagerten Körper 50, der am Träger 10 angebracht ist. Der Körper 50 erzeugt für mindestens einen Teilbereich der Flachformfeder 11 respektive der Federzungen 27 einen-Strömungsschatten, wobei der Strömungsschatten (wie bei einer Lichtquelle) als (idealisierter) Projektionsschatten zu verstehen ist, und allfällige Wirbeleffekte nicht berücksichtigt sind. Vorzugsweise schattet der Körper 50 die Flachformfeder 11 respektive die Federzungen 27 vollständig vom direkten Auftreffen der Strömung ab und erzeugt einen 100%-igen Strömungs- d.h. Projektionsschatten, wie in der Aufsicht der Figur 12b ersichtlich ist, wo die Flachformfeder 11 in der der axialen (Strömungs-)Richtung der Flüssigkeitsleitung 2 vollständig durch den Körper 50 abgedeckt ist. Es sind auch Körper 50 möglich, die einen proportional kleineren Strömungsschatten erzeugen, insbesondere dann, wenn bloss der steifere Teil der Federzunge 27 beim Befestigungsbereich der Flachformfeder 11 nicht abgeschattet ist. Der Körper 50 ist vorzugsweise aus Kunststoff gefertigt und weist eine der Strömung zugewandte und von der Flachfeder 11 abgewandte Schirmfläche 51 auf, welche senkrecht zur axialen Richtung der Flüssigkeitsleitung 2 verläuft und den Strömungsschatten erzeugt. Die Schirmfläche 51 weist vorzugsweise eine dem inneren Querschnitt der Flüssigkeitsleitung 2 entsprechende Grundform auf, welche eine oder mehrere als Zuführbereiche 52 dienende Ausnehmungen aufweist. Die Figuren 12a, 12b, 12c zeigen den vorgelagerten Körper 50 in Kombination mit einem Durchflussbegrenzer 1 gemäss den Figuren 9a, 9b, 9c und 9d. Der Fachmann wird jedoch verstehen, dass ein entsprechend der betreffenden Variante geformter Körper 50 auch in anderen Ausführungen des Durchflussbegrenzers 1 gemäss den Figuren 1 a, 1b, 1c, 2a, 2b, 2c, 3a, 3b, 3c, 10 und/oder 11 der Flachformfeder 11 respektive den Federzungen 12, 17, 19, 27 vorgelagert werden kann. Die Schirmfläche 51 weist beispielsweise eine kreisförmige Grundform auf, die in den Ausführungsformen des Durchflussbegrenzers 1 nach den Figuren 1 a, 1 b, 1 c, 2a, 2b, 2c, 9a, 9b, 9c, 9d, 10 und 11 durch in den Zuführbereichen 52 angeordnete Kreissegmente reduziert ist, und in den Ausführungsformen des Durchflussbegrenzers 1 nach den Figuren 3a, 3b, 3c eine beispielsweise kreisförmige Ausnehmung zu einem zentrierten Zuführkanal durch den Körper 50 zu den Federzungen 19 aufweist. Der Körper 50 weist beispielsweise gebogene Zuführwände 53 auf, die der Flachformfeder 11 zugewandt sind und sich im Wesentlichen in den Zuführbereichen 52 von der Schirmfläche 51 des Körpers 50 zu der von der Schirmfläche 51 abgewandten Befestigungsseite des Körpers 50 erstrecken. Mit zunehmendem Differenzdruck Δp werden Fluidströme durch den Zuführbereich 52 entlang den Zuführwänden 53 in Zuführspalten 54 geleitet, die im Wesentlichen keilförmig zwischen den Zuführwänden 53 und der Federzunge 12, 17, 19, 27 gebildet sind und sich bei zunehmendem Differenzdruck Δp und damit zunehmender Auslenkung der Federzunge 12, 17, 19, 27 vergrössern. In den Ausführungsformen des Durchflussbegrenzers 1 nach den Figuren 1 a, 1 b, 1c, 2a, 2b, 2c, 9a, 9b, 9c, 9d, 10 und 11 verjüngen die Zuführwände 53 den Körper 50 im Wesentlichen vom äusseren Randbereich der Schirmfläche 51 des Körpers 50 zur Befestigungsseite des Körpers 50, beispielsweise in Bogenform und in den Varianten nach den Figuren 2a, 2b, 2c, 9a, 9b, 9c, 9d, 10 und 11 zunehmend zum Zentrum Z des Trägers 10 hin. In den Ausführungsformen des Durchflussbegrenzers 1 nach den Figuren 3a, 3b, 3c weiten die Zuführwände 53 den Zuführkanal durch den Körper 50 im Wesentlichen von der Schirmfläche 51 des Körpers 50 zur Befestigungsseite des Körpers 50 zunehmend zum äusseren Randbereich des Trägers 10 aus, beispielsweise in Bogenform. Der Körper 50 ist beispielsweise zusammen mit der Flachformfeder 11 mittels einer Niete, beispielsweise durch Nietlöcher 55, oder durch Verkleben am Träger 10 befestigt.

In der Ausführungsvariante des Durchflussbegrenzers 1 gemäss den Figuren 12a, 12b, 12c, welche, wie die Varianten nach den Figuren 9a, 9b, 9c, 9d, eine doppelzüngige Flachformfeder 11 aufweist, basiert der Körper 50 beispielsweise auf einer zylindrischen Grundform, deren Mantel durch die gebogenen Zuführwände 53 und die Schirmfläche 51 gebildet wird, und deren Grund- und Deckfläche 56, 57 im Wesentlichen kreissegmentförmig ausgestaltet sind, wobei die Schirmfläche 51 durch die Kreissehnen und die Zuführwände 53 durch den Kreisbogen der Grund und Deckfläche 56, 57 verlaufen. Bei einer (kreis-)runden Ausgestaltung des Trägers 10, sind die Grund- und Deckflächen 56, 57 entsprechend rund geformt, d.h. der Körper 50 weist gerundete Grund- und Deckflächen 56, 57 auf, die jeweils senkrecht zur Schirmfläche 51 angeordnet sind und den Körper 50 in den durch den Kragen 15 gebildeten Ring einsetzbar machen. Der Körper 50 ist beispielsweise hohl ausgestaltet und an den Grund- und Deckflächen 56, 57 mit Öffnungen versehen. Wie in der Figur 12a ersichtlich ist, sind der Körper 50 und die Flachformfeder 11 an einem Befestigungssteg 34 angebracht.

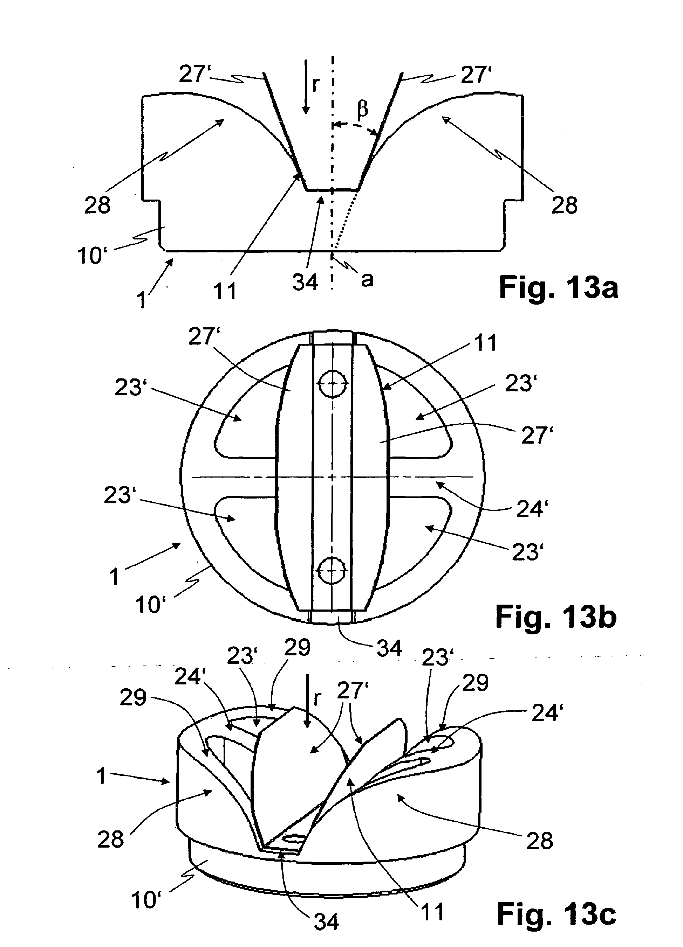

Die Figuren 13a, 13b, 13c illustrieren eine Ausführungsvariante des Durchflussbegrenzers 1, in der die (doppelzüngige) Flachformfeder 11 respektive die Federzungen 27' in der Ausgangslage, das heisst ohne einen Fluidfluss und bei niedrigen Differenzdruckwerten Δp, jeweils ungebogen, d.h. flach ausgestreckt geformt und mehrheitlich in Strömungsrichtung r ausgerichtet sind. Das heisst die Federzungen 27' verlaufen jeweils gerade und grösstenteils in Strömungsrichtung r und weisen gegenüber der Längsachse a der Flüssigkeitsleitung 2 jeweils einen Winkel β von weniger als 45° auf, vorzugsweise einen Winkel β zwischen 5° und 15°, wie im Querschnitt der Figur 13a ersichtlich ist. Dadurch bieten die Federzungen 27' der Strömung bei niedrigen Differenzdruckwerten Δp eine reduzierte Angriffsfläche. Es sind auch kleinere Winkel β zwischen den Federzungen 27' und der Längsachse a der Flüssigkeitsleitung 2 möglich, doch besteht abhängig von der Steifigkeit der Federzunge 27' die Gefahr dass, bei zu kleinem Winkel β ein unerwünschtes Schwingen und/oder Umbiegen der Federzunge 27' in die falsche (nicht in der Soll-) Richtung eintritt. Die Figuren 13a, 13b, 13c zeigen den Durchflussbegrenzer 1 in einer Ausführungsvariante, die in der Aufsicht im Wesentlichen der Ausführungsform gemäss den Figuren 9a, 9b, 9c und 9d entspricht, wobei die augestellten Federzungen 27' jedoch im Wesentlichen einen V-förmigen Querschnitt bilden. Der Fachmann wird jedoch verstehen, dass auch ausgehend von anderen Ausführungen des Durchflussbegrenzers 1 gemäss den Figuren 1a, 1b, 1c, 2a, 2b, 2c, 3a, 3b, 3c, 10 und/oder 11 die Flachformfeder 11 respektive die Federzungen 12, 17, 19, 27 und der Träger 10 entsprechend der nachfolgend mit Bezug zu den Figuren 13a, 13b, 13c beschriebenen Ausführungsform angepasst werden können. Insbesondere können auch die Federzungen 12, 17, 19, 27 so aufgestellt und ausgebildet werden, dass sie in der Ausgangslage gerade gestreckt sind und gegenüber der Längsachse a der Flüssigkeitsleitung 2 einen Winkel β von weniger als 45°, vorzugsweise einen Winkel β zwischen 15° und 25° aufweisen. Überdies kann der Träger 10 mit im Wesentlichen gleichbleibender Aufsicht, d.h. mit im Grundriss im Wesentlichen gleicher Ausgestaltung der Stege und Öffnungen, in axialer Richtung der Flüssigkeitsleitung 2 (Strömungsrichtung r) entsprechend dem in den Figuren 13a, 13b, 13c dargestellten Träger 10' angepasst werden. Wie in den Figuren 13a, 13b, 13c illustriert ist, ist der unter der Federzunge 27' liegende Bereich des Trägers 11' jeweils als sich in Gegenstromrichtung erhebende Rampe 28 ausgestaltet, beispielsweise mit bogenförmigen Querschnitt. Wie in der Figur 13c ersichtlich ist, wird die Rampe 28 durch den Steg 24' und die Seitenbereiche 29 der Öffnungen 23' gebildet. Die derart ausgebildete Rampe 28 steigt ausgehend vom Befestigungsbereich der Flachformfeder 11 am Träger 10', insbesondere vom Befestigungssteg 34, in Gegenstromrichtung an, bevor sie in der bogenförmigen Variante wieder leicht abfällt. In den Ausführungsformen des Durchflussbegrenzers 1 gemäss den Figuren 1a, 1b, 1c, 2a, 2b, 2c, 9a, 9b, 9c, 9d, 10, 11, 12a, 12b, 12c, 13a, 13b und 13c steigt die Rampe 28 jeweils gegen den äusseren Randbereich des Trägers 10, 10' hin an; in den Ausführungsformen des Durchflussbegrenzers 1 gemäss den Figuren 3a, 3b, 3c steigt die Rampe 28 jeweils zum Zentrum Z des Trägers 10 hin an. Die Federzunge 27' und die Rampe 28 sind so ausgebildet, dass sich die Federzunge 27 mit zunehmendem Differenzdruck Δp in Richtung Rampe 28 verbiegt, sich dabei zunehmend an die Rampe 28 anlegt und damit den Durchlass zunehmend reduziert. Dabei vergrössert sich der Winkel β der Federzunge 27' gegenüber der Längsachse a der Flüssigkeitsleitung 2 und die der Strömung ausgesetzte Angriffsfläche der Federzunge 27' nimmt zu.

Abschliessend soll festgehalten werden, dass sich durch das zunehmende Anlegen der Flachformfeder 11 respektive der Federzungen 12, 17, 19, 27, 27', 37 an den Träger 10, 10' der Öffnungswinkel zwischen der Flachformfeder 11 respektive der Federzunge(n) 12, 17, 19, 27, 27', 37 und dem Träger 10, 10' ausgehend von einem Maximalwert in der Ausgangslage im auslenkungsfreien, vom Träger 10, 10' abgebogenen Zustand der Flachformfeder 11 respektive der Federzunge(n) 12, 17, 19, 27, 27', 37, bis zu einem Minimalwert (typischerweise Null) im auf dem Träger 10, 10' aufliegenden, abgeplatteten Zustand der Flachformfeder 11 respektive der Federzunge(n) 12, 17, 19, 27, 27', 37 verkleinert. Dabei vergrössert sich der Strömungsquerschnitt dem die Flachformfeder 11 respektive die Federzunge(n) 12, 17, 19, 27, 27', 37 direkte Angriffsfläche bietet mit steigendem Differenzdruck beim zunehmenden Anlegen der Flachformfeder 11 respektive der Federzunge(n) 12, 17, 19, 27, 27', 37 an den Träger 10, 10'.

## Patentansprüche

1. Durchflussbegrenzer (1) zum Begrenzen eines Volumenstroms durch eine Flüssigkeitsleitung (2), umfassend einen Träger (10, 10') mit Durchlass und eine am Träger (10, 10') angebrachte Flachformfeder (11), wobei die Flachformfeder (11) mindestens eine Federzunge (12, 17, 19, 27, 27', 37) und der Durchlass mindestens eine Öffnung (13, 18, 23, 23') aufweisen, und wobei die Federzunge (12, 17, 19, 27, 27', 37) so ausgestaltet und über der Öffnung (13, 18, 23, 23') angeordnet ist, dass die Federzunge (12, 17, 19, 27, 27', 37) sich mit steigendem Differenzdruck (Δp) zunehmend an den Träger (10, 10') anlegt und dabei die Öffnung (13, 18, 23, 23') verkleinert und den Durchlass innerhalb eines definierten Druckbereichs reduziert, **dadurch gekennzeichnet,**
**dass** der Federzunge (27) ein Körper (50) so vorgelagert oder die Federzunge (27') in Strömungsrichtung (r) so ausgerichtet ist, dass die Federzunge (27, 27') einem um mindestens 25% reduzierten und sich mit steigendem Differenzdruck (Δp), beim zunehmenden Anlegen der Federzunge (12, 17, 19, 27, 27', 37) an den Träger (10, 10'),
vergrössernden Strömungsquerschnitt direkte Angriffsfläche bietet.

2. Durchflussbegrenzer (1) nach Anspruch 1, **dadurch gekennzeichnet, dass** der Federzunge (27) ein Körper (50) so vorgelagert oder die Federzunge (27') so in Strömungsrichtung (r) ausgerichtet ist, dass die Federzunge (27, 27') einem reduzierten Strömungsquerschnittsteil direkt ausgesetzt ist, der weniger als ein Oberflächenteil von 75% der Federzunge (27, 27') beträgt.

3. Durchflussbegrenzer (1) nach einem der Ansprüche 1 oder 2, **dadurch gekennzeichnet, dass** die Federzunge (27') bei einem niederen Differenzdruck (Δpₘᵢₙ₂) des definierten Druckbereichs so in Strömungsrichtung (r) ausgerichtet ist, dass die Federzunge (27') mehrheitlich in Strömungsrichtung (r) verläuft und einem reduzierten Strömungsquerschnittsteil direkte Angriffsfläche bietet, der weniger als ein Oberflächenteil von 75% der Federzunge (27'), insbesondere ein Oberflächenteil zwischen 8% und 25% der Federzunge (27'), beträgt.

4. Durchflussbegrenzer (1) nach einem der Ansprüche 1 bis 3, **dadurch gekennzeichnet, dass** die Federzunge (27') in einer strömungsfreien Ausgangslage gerade ausgebildet ist und gegenüber einer Längsachse (a) der Flüssigkeitsleitung (2) einen Winkel (β) von weniger als 45°, insbesondere einen Winkel (β) im Bereich von 5° bis 15°, aufweist.

5. Durchflussbegrenzer (1) nach einem der Ansprüche 1 bis 4, **dadurch gekennzeichnet, dass** der Träger (11') eine sich in Gegenstromrichtung erhebende Rampe (28) aufweist, und dass die Federzunge (27') so ausgestaltet ist, dass sie sich mit steigendem Differenzdruck (Δp) zunehmend verbiegt und an die Rampe (28) anlegt und dabei die Öffnung (23') kontinuierlich verkleinert und den Durchlass innerhalb des definierten Druckbereichs kontinuierlich reduziert.

6. Durchflussbegrenzer (1) nach einem der Ansprüche 1 oder 2, **dadurch gekennzeichnet, dass** der der Federzunge (27) vorgelagerte Körper (50) so eingerichtet und angeordnet ist, dass er bei einem niederen Differenzdruck (Δpₘᵢₙ₂) des definierten Druckbereichs für mindestens einen Oberflächenteil von 25% der Federzunge (27), insbesondere für einen Oberflächenteil im Bereich von 90% bis 100% der Federzunge (27), einen Strömungsschatten erzeugt.

7. Durchflussbegrenzer (1) nach Anspruch 6, **dadurch gekennzeichnet, dass** der Träger (10) im Wesentlichen eben ausgestaltet ist, und dass die Federzunge (27) so ausgestaltet ist, dass sie sich mit steigendem Differenzdruck (Δp) zunehmend abflacht und an den Träger (10) anlegt und dabei die Öffnung (23) kontinuierlich verkleinert und den Durchlass innerhalb des definierten Druckbereichs kontinuierlich reduziert.

8. Durchflussbegrenzer (1) nach einem der Ansprüche 1 bis 7, **dadurch gekennzeichnet, dass** der Durchlass mindestens zwei nebeneinander liegende Öffnungen (13, 18, 23, 23') umfasst, dass der Träger (10, 10') einen Steg (14, 24, 24') umfasst, welcher die nebeneinander liegenden Öffnungen (13, 18, 23, 23') voneinander trennt, und dass die Federzunge (12, 17, 19, 27, 27', 37) so angeordnet ist, dass sie beim steigenden Differenzdruck (Δp) zunehmend auf dem Steg (14, 24, 24') aufliegt und die Öffnungen (13, 18, 23, 23') kontinuierlich reduziert, wobei die Öffnungen (13, 18, 23, 23') in definierten Restbereichen offen bleiben.

9. Durchflussbegrenzer (1) nach einem der Ansprüche 1 bis 8, **dadurch gekennzeichnet, dass** der Durchlass mehrere rotationssymmetrisch angeordnete Öffnungen (18) umfasst, und dass die Flachformfeder (11) mehrere rotationssymmetrisch angeordnete Federzungen (17,19) umfasst, welche jeweils so angeordnet sind, dass sie beim steigenden Differenzdruck (Δp) zunehmend auf den zugeordneten Stegen (14) aufliegen und die Öffnungen (18) kontinuierlich verkleinern.

10. Durchflussbegrenzer (1) nach einem der Ansprüche 1 bis 9, **dadurch gekennzeichnet, dass** die Flachformfeder (11) mindestens zwei entlang einer gemeinsamen Längsachse in voneinander entgegengesetzten Richtungen ausgerichtete Federzungen (17, 19, 27, 27') aufweist.

11. Durchflussbegrenzer (1) nach einem der Ansprüche 1 bis 10, **dadurch gekennzeichnet, dass** die Federzungen (12, 19) an einem äusseren Randbereich des Trägers (10) befestigt sind.

12. Durchflussbegrenzer (1) nach einem der Ansprüche 1 bis 10, **dadurch gekennzeichnet, dass** die Federzungen (17, 27, 27', 37) im Zentrum (Z) des Trägers (10) oder an einem durchs Zentrum (Z) verlaufenden Befestigungssteg (34) befestigt sind.

13. Durchflussbegrenzer (1) nach einem der Ansprüche 1 bis 12, **dadurch gekennzeichnet, dass** die Federzunge (12, 17, 19, 27, 27', 37) und die Öffnung (13, 18, 23, 23') jeweils entlang einer Längsrichtung eine im Wesentlichen gleiche Ausdehnung aufweisen.

## Claims

1. Flow limiter (1) for limiting a volumetric flow through a liquid line (2), comprising a carrier (10, 10') with a passage and a flatform spring (11) attached to the carrier (10, 10'), the flatform spring (11) having at least one spring tongue (12, 17, 19, 27, 27', 37) and the passage having at least one orifice (13, 18, 23, 23') and the spring tongue (12, 17, 19, 27, 27', 37) being configured and arranged above the orifice (13, 18, 23, 23') such that, with a rising differential pressure (Δp), the spring tongue (12, 17, 19, 27, 27', 37) comes to bear increasingly against the carrier (10, 10') and at the same time reduces the size of the orifice (13, 18, 23, 23') and reduces the passage within a defined pressure range, **characterized in that**
the spring tongue (27) is preceded by a body (50) or the spring tongue (27') is oriented in the direction of flow (r) such that the spring tongue (27, 27') offers a direct attack surface to a flow cross section which is reduced by at least 25% and which increases in size with a rising differential pressure (Δp) when the spring tongue (12, 17, 19, 27, 27', 37) increasingly comes to bear against the carrier (10, 10').

2. Flow limiter (1) according to Claim 1, **characterized in that** the spring tongue (27) is preceded by a body (50) or the spring tongue (27') is oriented in the direction of flow (r) such that the spring tongue (27, 27') is exposed directly to a reduced flow cross-sectional part which amounts to less than a surface part of 75% of the spring tongue (27, 27').

3. Flow limiter (1) according to either one of Claims 1 and 2, **characterized in that**, at a low differential pressure (Δpₘᵢₙ₂) of the defined pressure range, the spring tongue (27') is oriented in the direction of flow (r) such that the majority of the spring tongue (27') runs in the direction of flow (r) and the spring tongue (27') offers a direct attack surface to a reduced flow cross-sectional part which amounts to less than a surface part of 75% of the spring tongue (27'), in particular a surface part of between 8% and 25% of the spring tongue (27').

4. Flow limiter (1) according to one of Claims 1 to 3, **characterized in that**, in a flow-free initial position, the spring tongue (27') is of straight form and has an angle (β) of less than 45°, in particular an angle (β) in the range of 5° to 15°, with respect to a longitudinal axis (a) of the liquid line (2).

5. Flow limiter (1) according to one of Claims 1 to 4, **characterized in that** the carrier (11') has a ramp (28) rising opposite to the direction of flow, and **in that** the spring tongue (27') is configured such that, with a rising differential pressure (Δp), it is bent increasingly and comes to bear against the ramp (28), and at the same time continuously reduces the size of the orifice (23') and continuously reduces the passage within the defined pressure range.

6. Flow limiter (1) according to either one of Claims 1 and 2, **characterized in that** the body (50) preceding the spring tongue (27) is set up and arranged such that, at a low differential pressure (Δpₘᵢₙ₂) of the defined pressure range, it generates a flow shadow for at least a surface part of 25% of the spring tongue (27), in particular for a surface part in the range of 90% to 100% of the spring tongue (27).

7. Flow limiter (1) according to Claim 6, **characterized in that** the carrier (10) is in essentially planar configuration, and **in that** the spring tongue (27) is configured such that, with a rising differential pressure (Δp), it is increasingly flattened and comes to bear against the carrier (10) and at the same time continuously reduces the size of the orifice (23) and continuously reduces the passage within the defined pressure range.

8. Flow limiter (1) according to one of Claims 1 to 7, **characterized in that** the passage comprises at least two orifices (13, 18, 23, 23') lying next to one another, **in that** the carrier (10,10') comprises a web (14, 24, 24') which separates the orifices (13, 18, 23, 23') lying next to one another from one another, and **in that** the spring tongue (12, 17, 19, 27, 27', 37) is arranged such that, with a rising differential pressure (Δp), it lies increasingly on the web (14, 24, 24') and continuously reduces the orifices (13, 18, 23, 23'), the orifices (13, 18, 23, 23') remaining open in defined remaining regions.

9. Flow limiter (1) according to one of Claims 1 to 8, **characterized in that** the passage comprises a plurality of orifices (18) arranged in a rotationally symmetrical manner, and **in that** the flatform spring (11) comprises a plurality of spring tongues (17, 19) which are arranged in a rotationally symmetrical manner and are in each case arranged such that, with a rising differential pressure (Δp), they lie increasingly on the assigned webs (14) and continuously reduce the size of the orifices (18).

10. Flow limiter (1) according to one of Claims 1 to 9, **characterized in that** the flatform spring (11) has at least two spring tongues (17, 19, 27, 27') oriented in directions opposite to one another along a common longitudinal axis.

11. Flow limiter (1) according to one of Claims 1 to 10, **characterized in that** the spring tongues (12, 19) are fastened to an outer marginal region of the carrier (10).

12. Flow limiter (1) according to one of Claims 1 to 10, **characterized in that** the spring tongues (17, 27, 27', 37) are fastened in the center (Z) of the carrier (10) or to a fastening web (34) running through the center (Z).

13. Flow limiter (1) according to one of Claims 1 to 12, **characterized in that** the spring tongues (12, 17, 19, 27, 27', 37) and the orifice (13, 18, 23, 23') have in each case an essentially identical extent along a longitudinal direction.

## Revendications

1. Limiteur de débit (1) pour limiter un débit à travers une conduite de fluide (2), comprenant un support (10, 10') avec un passage et un ressort de forme plate (11) monté sur le support (10, 10'), le ressort de forme plate (11) présentant au moins une langue de ressort (12, 17, 19, 27, 27', 37) et le passage présentant au moins une ouverture (13, 18, 23, 23'), et la langue de ressort (12, 17, 19, 27, 27', 37) étant configurée de telle sorte, et étant disposée par-dessus l'ouverture (13, 18, 23, 23') de telle sorte que la langue de ressort (12, 17, 19, 27, 27', 37) s'applique de plus en plus contre le support (10, 10') avec l'augmentation de la pression différentielle (Δp) et rétrécisse ainsi l'ouverture (13, 18, 23, 23') et réduise le passage à l'intérieur d'une plage de pression définie, **caractérisé en ce**
**qu'**un corps (50) est placé avant la langue de ressort (27) ou la langue de ressort (27') est orientée dans la direction d'écoulement (r) de telle sorte que la langue de ressort (27, 27') fournisse une surface d'application directe pour une section transversale d'écoulement réduite d'au moins 25 % et augmentant avec la pression différentielle croissante (Δp), lors de l'application accrue de la langue de ressort (12, 17, 19, 27, 27', 37) contre le support (10, 10').

2. Limiteur de débit (1) selon la revendication 1, **caractérisé en ce qu'**un corps (50) est placé avant la langue de ressort (27) ou la langue de ressort (27') est orientée dans la direction d'écoulement (r) de telle sorte que la langue de ressort (27, 27') soit soumise directement à une partie de section transversale d'écoulement réduite qui est inférieure à une partie de surface de 75 % de la langue de ressort (27, 27').

3. Limiteur de débit (1) selon l'une quelconque des revendications 1 ou 2, **caractérisé en ce que** la langue de ressort (27'), dans le cas d'une pression différentielle plus basse (Δpₘᵢₙ₂) de la plage de pression définie, est orientée dans la direction d'écoulement (r) de telle sorte que la langue de ressort (27') s'étende majoritairement dans la direction d'écoulement (r) et fournisse une surface d'application directe à une partie de section transversale d'écoulement réduite, qui est inférieure à une partie de surface de 75 % de la langue de ressort (27'), notamment une partie de surface comprise entre 8 % et 25 % de la langue de ressort (27').

4. Limiteur de débit (1) selon l'une quelconque des revendications 1 à 3, **caractérisé en ce que** la langue de ressort (27') est réalisée sous forme droite dans une position de départ exempte d'écoulement, et présente un angle (β) inférieur à 45°, notamment un angle (β) compris dans la plage de 5° à 15° par rapport à un axe longitudinal (a) de la conduite de fluide (2).

5. Limiteur de débit (1) selon l'une quelconque des revendications 1 à 4, **caractérisé en ce que** le support (11') présente une rampe (28) se rehaussant dans la direction de contre-courant et **en ce que** la langue de ressort (27') est configurée de telle sorte qu'elle fléchisse de plus en plus avec l'augmentation de la pression différentielle (Δp) et s'applique contre la rampe (28) et rétrécisse en l'occurrence l'ouverture (23') de manière continue et réduise de manière continue le passage à l'intérieur de la plage de pression définie.

6. Limiteur de débit (1) selon l'une quelconque des revendications 1 ou 2, **caractérisé en ce que** le corps (50) placé avant la langue de ressort (27) est prévu et disposé de telle sorte qu'il produise une zone morte d'écoulement dans le cas d'une plus faible pression différentielle (Δpₘᵢₙ₂) de la plage de pression définie pour au moins une partie de surface de 25 % de la langue de ressort (27), en particulier pour une partie de surface dans la plage de 90 % à 100 % de la langue de ressort (27).

7. Limiteur de débit (1) selon la revendication 6, **caractérisé en ce que** le support (10) est configuré de manière sensiblement plane, et **en ce que** la langue de ressort (27) est configurée de telle sorte qu'elle s'aplatisse de manière croissante avec l'augmentation de la pression différentielle (Δp) et s'applique contre le support (10) et rétrécisse en l'occurrence l'ouverture (23) de manière continue et réduise de manière continue le passage à l'intérieur de la plage de pression définie.

8. Limiteur de débit (1) selon l'une quelconque des revendications 1 à 7, **caractérisé en ce que** le passage comprend au moins deux ouvertures (13, 18,23, 23') situées les unes à côté des autres, **en ce que** le support (10, 10') comprend une membrure (14, 24, 24') qui sépare l'une de l'autre les ouvertures situées les unes à côté des autres et **en ce que** la langue de ressort (12, 17, 19, 27, 27', 37) est disposée de telle sorte qu'elle s'applique de plus en plus contre la membrure (14, 24, 24') lors de l'augmentation de la pression différentielle (Δp) et qu'elle rétrécisse les ouvertures (13, 18, 23, 23') de manière continue, les ouvertures (13, 18, 23, 23') restant ouvertes dans des plages résiduelles définies.

9. Limiteur de débit (1) selon l'une quelconque des revendications 1 à 8, **caractérisé en ce que** le passage comprend plusieurs ouvertures (18) disposées suivant une symétrie de révolution et **en ce que** le ressort de forme plate (11) comprend plusieurs langues de ressort (17, 19) disposées suivant une symétrie de révolution, lesquelles sont disposées à chaque fois de telle sorte qu'elles s'appliquent de plus en plus sur les membrures associées (14) lors de l'augmentation de la pression différentielle (Δp) et qu'elles rétrécissent de manière continue les ouvertures (18).

10. Limiteur de débit (1) selon l'une quelconque des revendications 1 à 9, **caractérisé en ce que** le ressort de forme plate (11) présente au moins deux langues de ressort (17, 19, 27, 27') orientées le long d'un axe longitudinal commun dans des directions opposées.

11. Limiteur de débit (1) selon l'une quelconque des revendications 1 à 10, **caractérisé en ce que** les langues de ressort (12, 19) sont fixées à une région de bord extérieure du support (10).

12. Limiteur de débit (1) selon l'une quelconque des revendications 1 à 10, **caractérisé en ce que** les langues de ressort (17, 27, 27', 37) sont fixées au centre (Z) du support (10) ou sur une membrure de fixation (34) s'étendant à travers le centre (Z).

13. Limiteur de débit (1) selon l'une quelconque des revendications 1 à 12, **caractérisé en ce que** les langues de ressort (12, 17, 19, 27, 27', 37) et l'ouverture (13, 18, 23, 23') présentent à chaque fois le long d'une direction longitudinale, un allongement essentiellement identique.
